# EUROPEAN PATENT SPECIFICATION

(11) **EP 1 936 723 B1**
(45) Date of publication and mention of the grant of the patent: **05.06.2013**
(21) Application number: 06810338.1
(22) Date of filing: 20.09.2006
(51) Int. Cl.: H01M 8/02, H01M 4/86, H01M 4/88, H01M 8/12

(54) **PROCESS FOR PRODUCING A FUEL CELL**
PROZESS ZUR HERSTELLUNG EINER BRENNSTOFFZELLE
PROCEDE DE FABRICATION D'UNE PILE À COMBUSTIBLE

(30) Priority: 20.09.2005 JP 2005271858
(43) Date of publication of application: 25.06.2008
(73) Proprietor: Kyocera Corporation, Kyoto-shi, Kyoto-fu 612-8501 (JP)
(72) Inventor: HIGASHI, Masahiko, Kirishima-shi, Kagoshima 8994312 (JP); INOUE, Shuushin, Kirishima-shi, Kagoshima 8994312 (JP)
(74) Representative: Beetz & Partner
(86) International application number: PCT/JP2006/318642
(87) International publication number: WO 2007/034835

(56) References cited:
- EP-A2- 1 453 128
- WO-A1-2004/088783
- JP-A- 06 283 178
- JP-A- 2003 297 387
- JP-A- 2004 055 194
- JP-A- 2004 247 248
- JP-A- 2004 518 257

## Description

### Technical Field

The present invention relates to a method for manufacturing a fuel cell.

A method as described in the preamble portion of patent claims 1 and 4 is known from WO 2004/088783 Al.

### Background Art

As the coming generation of energy, in recent years, there have been proposed various types of fuel cell apparatuses in which a stack of fuel cells are accommodated inside a housing.

A fuel cell for use in a fuel cell apparatus of conventional design is manufactured by laminating, on an electrically conductive support substrate, an inner electrode, a solid electrolyte, and an outer electrode one after another. In the solid electrolyte and a part of the inner electrode which is exposed from the outer electrode is disposed an interconnector so as not to make connection to the outer electrode. The electrically conductive support substrate has formed therein a plurality of gas channels constituting gas passages.

Electrical connection between one fuel cell and the other fuel cell is established by connecting the electrically conductive support substrate of one fuel cell to the outer electrode of the other fuel cell via the interconnector and a current-collecting member disposed in the electrically conductive support substrate. As is disclosed in Japanese Unexamined Patent Publication JP-A 2004-234969, the electrically conductive support substrate of a hollow flat plate-shaped or cylindrical-shaped fuel cell has customarily been manufactured by means of extrusion.

Moreover, as a method for manufacturing a flat plate-shaped fuel cell, there has been known a manufacturing process that employs a tape lamination method, as is disclosed in Japanese Unexamined Patent Publication JP-A 2003-297387.

However, according to JP-A 2004-234969, the support substrate is prepared by the extrusion forming method. This gives rise to a problem of lack of mass productivity. That is, in the case of adopting the extrusion forming method, it is necessary to prepare support substrate compacts on an individual basis. This leads to inefficiency in manufacturing and difficulty in mass production, in consequence whereof there results a problem of rising costs.

Furthermore, according to the description of JP-A 2003-297387, in the production of the flat plate-shaped fuel cell apparatus, green tapes are laminated on top of each other, and then polyethylene and carbon black are print-formed in a part of the laminate in which is formed a gas channel. Subsequently, the printed substances are caused to scatter and vanish during firing thereby to form the gas channel. However, in the case of adopting such a tape lamination method, a crack tends to be generated at a corner of the gas channel. Even granted that no crack appears in the course of manufacture, there is a possibility that generation and propagation of a crack occurs due to a long-time electric power generation that will eventually cause occurrence of gas leakage through the gas channel.

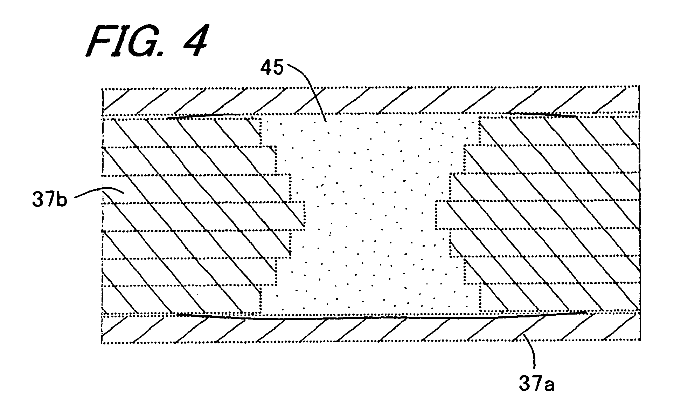

In addition, at the time of preparing a substrate by the tape lamination method (sheet lamination method), in general, green tapes are pressed through the application of pressure in the direction of the thickness thereof in order to improve the adherability between the green tapes. In this case, as shown in Fig. 4, a space forming a gas channel is prone to being so shaped that the side face at the midportion thereof in the direction of lamination of the tapes protrudes inwardly (protrudes toward the to-be-scattered substances), which leads to occurrence of peeling at a corner of the space forming a gas channel. Even if no peeling occurs, due to low adhesion strength, a crevice could be created following the completion of firing. After all, there is a possibility that propagation of a crack occurs at the corner during electric power generation that will eventually cause occurrence of gas leakage through the gas channel.

WO 2004/088783 A1 discloses a method for manufacturing a fuel cell constituted such that on a support substrate having a gas channel formed inside are laminated a first electrode, a solid electrolyte, and a second electrode one after another.

### Disclosure of Invention

An object of the invention is to provide a method for manufacturing a fuel cell capable of preventing occurrence of gas leakage through a gas channel and that allows production of such a fuel cell in high volume with lower costs while preventing occurrence of cracking at corners of the gas channel.

According to the present invention this object is accomplished by a method as claimed in claims 1 and 4, respectively.

Dependent claims are directed on features of preferred embodiments of the invention.

### Brief description of Drawings

Other and further objects, features, and advantages of the invention will be more explicit from the following detailed description taken with reference to the drawings.

Figs. 1A through 1C are views each showing a fuel cell in accordance with one embodiment of the invention, Fig. 1A being a transverse sectional view thereof, Fig. 1B being a vertical sectional view thereof, and Fig. 1C being an enlarged sectional view of a gas channel and the vicinities thereof.

Figs. 2A through 2F are plan views of various types of tapes that are employed in a fuel cell manufacturing method in accordance with one embodiment of the invention, Fig. 2A showing an interconnector layer tape, Fig. 2B showing a support substrate tape, Fig. 2C showing a support substrate tape having through holes, Fig. 2D showing a fuel-side electrode tape, Fig. 2E showing a solid electrolyte tape, and Fig. 2F showing an oxygen-side electrode tape.

Figs. 3A through 3D are operation process views for explaining the fuel cell manufacturing method of one embodiment of the invention, Figs. 3A and 3B being transverse sectional views for explaining a lamination operation and Figs. 3C and 3D being views for explaining cutting positions set for a laminate, in which Fig. 3C is a plan view and Fig. 3D is a transverse sectional view.

Fig. 4 is a transverse sectional view showing a state where a space forming a gas channel is filled with a gas channel forming material.

Figs. 5A and 5B are views each showing a state where three support substrate compacts constituting the fuel cell in accordance with another embodiment of the invention are present, Fig. 5A being a sectional view thereof and Fig. 5B being a plan view thereof.

Figs. 6A and 6B are views each showing a state where three support substrate compacts constituting the fuel cell in accordance with still another embodiment of the invention are present, in which no solid electrolyte material 43 is formed, Fig. 6A being a plan view thereof and Fig. 6B being a sectional view thereof.

Fig. 7 is an explanatory view showing a state where a core made of a gas channel forming material is housed in a concavity which is created as a result of laminating a plurality of support substrate tapes.

Fig. 8 is a plan view showing the support substrate tape having formed therein through holes, the width of each of which is increased gradually from one end to the other in a direction in which a gas flows.

Fig. 9 is a transverse sectional view showing a fuel cell manufactured by forming a solid electrolyte and an oxygen-side electrode on a support substrate which serves also as a fuel-side electrode.

Figs. 10A and 10B are transverse sectional views each showing a fuel cell of interconnector-less type in which a solid electrolyte is formed so as to surround a support substrate.

Fig. 11A is a sectional view showing a state where a gas channel having a substantially circular sectional profile is formed, and Fig. 11B is a sectional view showing a state where the gas channel is formed in the vicinity of the solid electrolyte.

### Best Mode for Carrying out the Invention

Now referring to the drawings, preferred embodiments of the invention are described below.

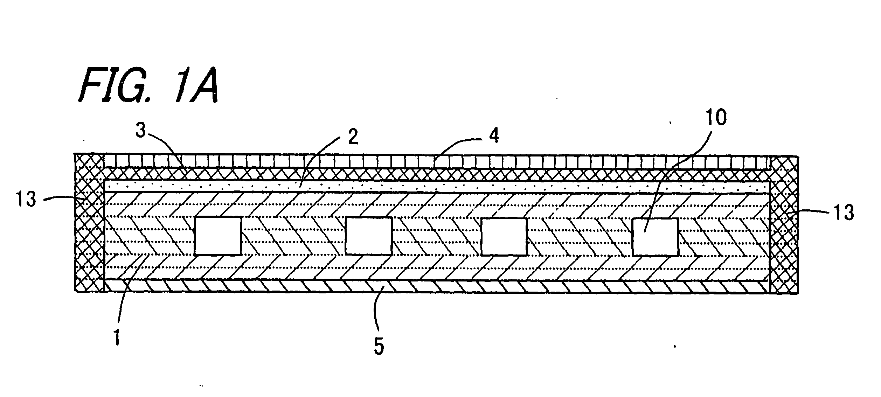

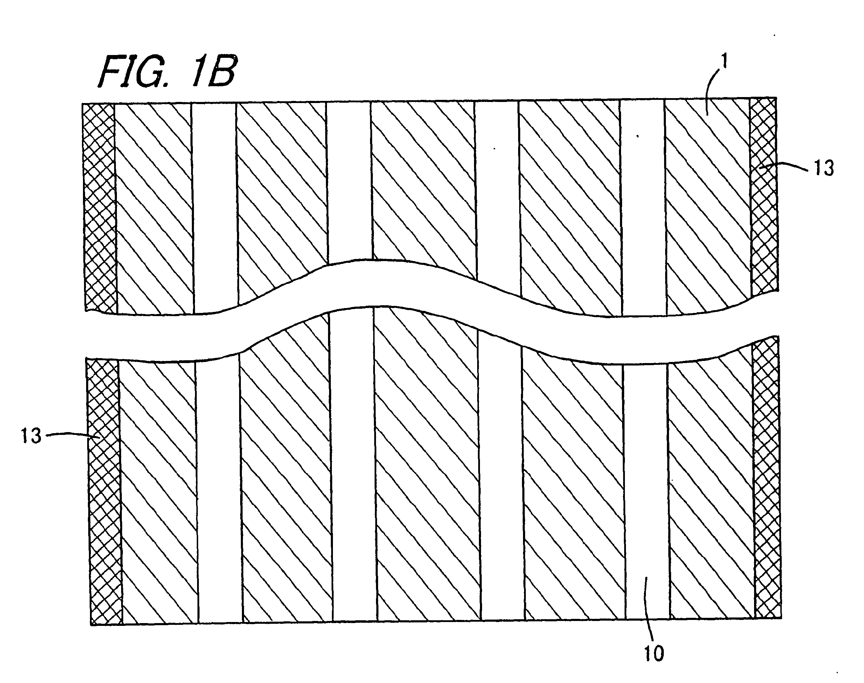

A fuel cell according to the invention is, as shown in Figs. 1A through 1C, manufactured by forming a fuel-side electrode (a first electrode) 2, a solid electrolyte 3, and an oxygen-side electrode (a second electrode) 4 one after another on an upper principal surface of a support substrate 1, and also forming an interconnector layer 5 on a lower principal surface of the support substrate 1.

That is, the support substrate 1 is formed of a platy and rod-like porous element and has four gas channels 10 each having a substantially rectangular sectional profile formed inside so as to pass therethrough in a lengthwise direction. On the upper surface of the support substrate 1 are laminated the porous fuel-side electrode 2, the dense solid electrolyte 3, and the porous oxygen-side electrode 4 one after another. On the other hand, on the lower surface of the support substrate 1 is laminated the dense interconnector layer 5. Moreover, on each of opposite side surfaces of the support substrate 1 is formed a dense insulating gas seal layer 13. The gas seal layer 13 has its lower end connected to the interconnector layer 5 and has its upper end connected to the solid electrolyte 3. In this way, the outer peripheral surface, exclusive of the lengthwise opposite end faces, of the support substrate 1 is covered with the solid electrolyte 3, the interconnector layer 5, and the dense insulating gas seal layer 13. Note that each of the lengthwise opposite end faces of the support substrate 1 has openings of the gas channels 10.

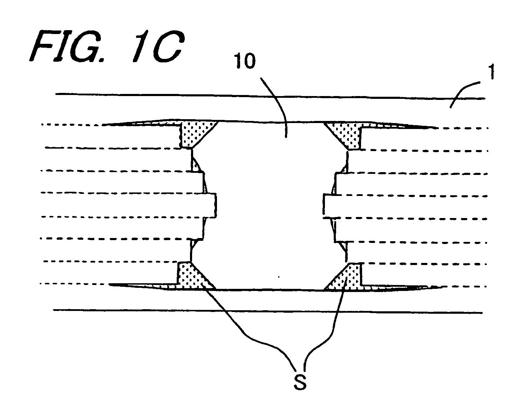

As shown in Fig. 1C, the gas channel 10 has a rectangular sectional profile, and a fillet portion S is formed at a corner thereof. Thereby, the corner of the gas channel 10 is rounded off. In Fig. 1C, a material constituting the fillet portion S is adhered not only to the four corners of the gas channel 10 but also to sharp edges of the side surface of the gas channel 10. The formation of the fillet portion S and the adhesion of the fillet portion material to the sharp edges of the side surface can be controlled in accordance with the percentage of inorganic material content in a gas channel forming material which will be described later. That is, in a case where the gas channel forming material is high in inorganic material content, the material constituting the fillet portion S is adhered not only to the four corners of the gas channel 10 but also to the sharp edges of the side surface thereof, and as a consequence the gas channel becomes nearly circular in cross section. On the other hand, in a case where the gas channel forming material is low in inorganic material content, the material constituting the fillet portion S is adhered mainly to the four corners of the gas channel 10 thereby to form the fillet portions S.

Although it is preferable that the fillet portion S is made of the material constituting the support substrate 1 and is thus porous, the material constituting the fillet portion S does not have to be an inorganic material which is electrical conductive and porous as well, so long as it lends itself to the formation of the fillet portion S at the corner of the gas channel 10. For example, the fillet portion S can be made of alumina or a solid electrolyte material.

### (Support substrate 1)

The support substrate 1 is rectangular in cross section and is made as a platy porous conductor on the whole. In order for a fuel gas to permeate to the fuel-side electrode 2, the support substrate 1 is designed to exhibit gas permeability. Moreover, it is required that the support substrate 1 be electrically conductive to collect electricity through the interconnector layer 5. In order to satisfy such a requirement and to avoid inconveniences resulting from a co-fired operation as well, it is desirable to constitute the support substrate 1 with use of an iron-group metal component and a specific rare earth oxide.

It is preferable that the thickness of the support substrate 1 is set to be greater than or equal to 1 mm in terms of supporting of a power generating portion on one hand, and is set to be smaller than or equal to 3 mm in terms of electrical conductivity between the oxygen-side electrode 4 and the interconnector layer 5 on the other hand.

The iron-group metal component is used to impart electrical conductivity to the support substrate 1. It is possible to use any of a single iron-group metal, an iron-group metallic oxide, an alloy of iron-group metal, and an alloy oxide thereof. The examples of the iron-group metal include iron, nickel, and cobalt. Although any one of these materials can be used in the invention, it is preferable that Ni and/or NiO are contained as the iron-group metal component from the standpoint of inexpensiveness and stability in a fuel gas.

Moreover, the rare earth oxide is used to approximate the thermal expansion coefficient of the support substrate 1 to that of ZrO₂ containing a rare earth element constituting the solid electrolyte 2. In order to maintain a high electrical conductivity and to prevent diffusion of elements into the solid electrolyte 2 and so forth, an oxide containing at least one kind of rare earth element selected from the group consisting of Y, Lu, Yb, Tm, Er, Ho, Dy, Gd, Sm and Pr is used in combination with the aforementioned iron-group component. The specific examples of such a rare earth oxide include Y₂O₃, Lu₂O₃, Yb₂O₃, Tm₂O₃, Er₂O₃, Ho₂O₃, Dy₂O₃, Gd₂O₃, Sm₂O₃, and Pr₂O₃. Among them, the use of Y₂O₃, Yb₂O₃ is particularly desirable from a low cost standpoint.

In order to strengthen the connection between the support substrate 1 and the interconnector layer 5, an intermediary layer may be disposed therebetween. Moreover, a P-type semiconductor or the like may be disposed externally of the interconnector layer 5 to take out output.

### (Interconnector layer 5)

The interconnector layer 5 is made of electrically conductive ceramics. Being brought into contact with a fuel gas (hydrogen) and an oxygen-containing gas, the interconnector layer 5 needs to be designed to exhibit resistance to reduction and resistance to oxidation. Therefore, as such electrically conductive ceramics, in general, a lanthanum chromite-based perovskite-type oxide (LaCrO₃-based oxide) is used. Moreover, in order to prevent the leakage of a fuel gas which passes through the inside of the support substrate 1 and the leakage of an oxygen-containing gas which passes through the outside of the support substrate 1, the electrically conductive ceramics needs to be dense. It is thus preferable that the electrically conductive ceramics has a relative density of, for example, 93% or above, and more particularly 95% or above.

It is preferable that the interconnector layer 5 ranges in thickness from 10 to 200 µm from the standpoint of gas leakage prevention and electrical resistance.

### (Fuel-side electrode 2)

The fuel-side electrode 2 is provided to produce an electrode reaction, and is made of an electrically conductive porous cermet which is well known per se. For example, the fuel-side electrode 2 is made of ZrO₂ in which a rare earth element is solid-solved, and Ni and/or NiO. As the ZrO₂ in which a rare earth element is solid-solved (stabilized zirconia), it is desirable to use a material similar to the one used to form the solid electrolyte 3 as will be described later.

It is preferable that the content of stabilized zirconia in the fuel-side electrode 2 falls in a range of from 35 to 65% by volume, and that the content of Ni or NiO therein falls in a range of from 65 to 35% by volume. It is also preferable that the open porosity of the fuel-side electrode 2 is greater than or equal to 15%, and more particularly falls in a range of from 20 to 40%. Further, it is preferable that the thickness of the fuel-side electrode 2 falls in a range of from 1 to 30 µm from the standpoint of enhancing performance capabilities and preventing occurrence of peeling or the like trouble resulting from the difference in thermal expansion between the solid electrolyte 3 and the fuel-side electrode 2.

### (Solid electrolyte 3)

The solid electrolyte 3 disposed on the fuel-side electrode 2 is made of dense ceramics which is ZrO₂ in which a rare earth element is solid-solved (usually called: stabilized zirconia) in an amount of, in general, 3 to 15 mol %. The examples of the rare earth element include Sc, Y, La, Ce, Pr, Nd, Pm, Sm, Eu, Gd, Tb, Dy, Ho, Er, Tm, Yb and Lu. Among them, the use of Y, Yb is particularly desirable from a low cost standpoint.

From the standpoint of gas permeation prevention, it is preferable that the stabilized zirconia ceramics constituting the solid electrolyte 3 is dense to have a relative density (according to the Archimedes' method) of 93% or above, and more particularly 95% or above, and that its thickness falls in a range of from 10 to 100 µm. Note that the solid electrolyte 3 may be made of a lanthanum gallate-based perovskite-type composite instead of the stabilized zirconia.

### (Gas seal layer 13)

It is preferable that the gas seal layer 13 is composed of a solid electrolyte material membrane made of a solid electrolyte material in terms of a reduction in the number of kinds of materials to be used and reliable sealing of a gas. Nevertheless, the gas seal layer 13 may be formed of any given material so long as it is a dense insulating material. For example, the gas seal layer may be formed of alumina.

In a case where the gas seal layer 13 formed on each of the opposite side surfaces of the support substrate 1 is composed of the solid electrolyte material membrane, it is possible to use the same material as that constituting the solid electrolyte 3 formed on the upper surface of the fuel-side electrode 2. Nevertheless, there is no need to use exactly the same material as that constituting the solid electrolyte 3, and a material which is slightly different in composition from the material constituting the solid electrolyte 3 can also be used. It is thus possible to use a lanthanum gallate-based solid electrolyte material. Moreover, since this region does not contribute to electric power generation, it is not necessary to use a solid electrolyte material. As has already been described, commonly-used insulating dense ceramics can also be used. It is preferable that the thickness of the gas seal layer 13 composed of the solid electrolyte material membrane is, just as is the case with the solid electrolyte 3, adjusted to be greater than or equal to 10 µm from the standpoint of gas permeation prevention.

### (Oxygen-side electrode 4)

The oxygen-side electrode 4 is made of electrically conductive ceramics composed of a so-called ABO₃ perovskite-type oxide. As such a perovskite-type oxide, a transition metal perovskite-type oxide, and more particularly at least one kind of substances selected from among an LaMnO₃-based oxide having La in the A-site, an LaFeO₃-based oxide, and an LaCoO₃-based oxide are desirable. In terms of its high electrical conductivity at an operating temperature of approximately 600 to 1000 °C, the use of the LaFeO₃-based oxide is particularly desirable. Note that the above-described perovskite-type oxide may be such as to contain, in addition to La, Sr or the like in the A-site, and may also be such as to contain, in addition to Fe, Co, Mn, or the like in the B-site.

Moreover, the oxygen-side electrode 4 needs to be designed to exhibit gas permeability. Therefore, the electrically conductive ceramics (perovskite-type oxide) constituting the oxygen-side electrode 4 should preferably have an open porosity of greater than or equal to 20%, and more particularly an open porosity falling in a range of from 30 to 50%. It is preferable that such an oxygen-side electrode 4 ranges in thickness from 30 to 100 µm from the standpoint of electricity collecting property. An oxygen gas, oxygen-containing air, and the like are supplied to the oxygen-side electrode 4.

Being made to have a high open porosity, the oxygen-side electrode 4 is liable to suffer from breakage at its end portions. In light of this, as shown in Fig. 1A, it is preferable that the gas seal layer 13 formed on both sides of the support substrate 1 has its upper end portion made to protrude upwardly from the upper surface of the solid electrolyte 3 so that the oxygen-side electrode 4 can be formed between the upper end portions of the gas seal layers 13 by means of filling.

### (Production of the fuel cell)

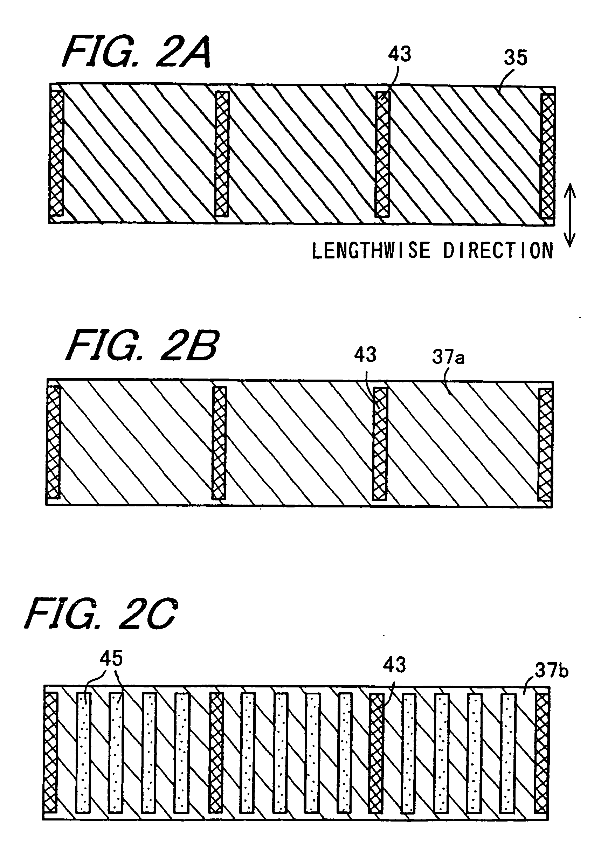

The fuel cell having the structure thus far described can be manufactured in the following manner. At the outset, an organic binder, a solvent, and so forth are admixed in powder of a predetermined raw material. The thus obtained admixture is compacted into tapes by the doctor blade method so as to form 6 varieties of tapes as shown in Figs. 2A through 2F.

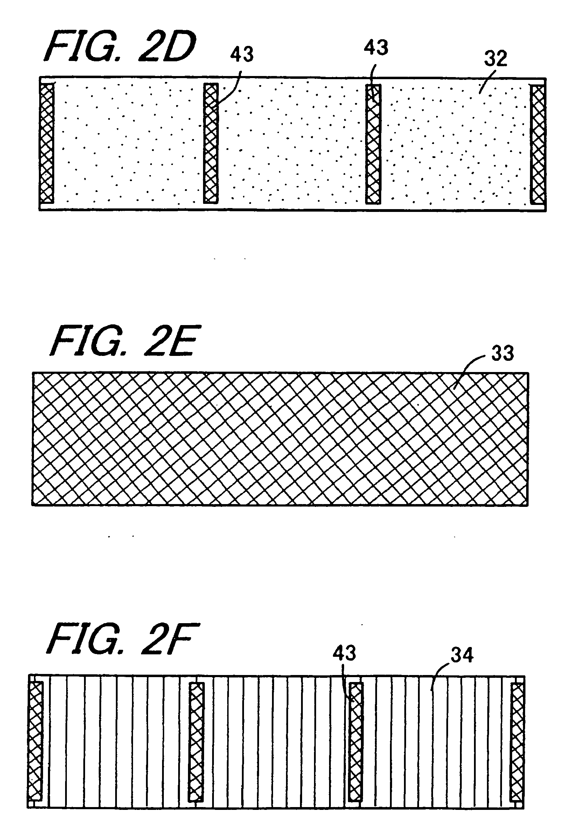

Herein, Fig. 2A shows an interconnector layer tape 35, Fig. 2B shows a support substrate tape 37a, Fig. 2C shows a support substrate tape 37b forming the gas channel 10, Fig. 2D shows a fuel-side electrode tape 32, Fig. 2E shows a solid electrolyte tape 33, and Fig. 2F shows an oxygen-side electrode tape 34. Each of these tapes, exclusive of the solid electrolyte tape 33 shown in Fig. 2E, has formed therein a plurality of through holes in the direction of thickness of the tape, of which each has a rectangular sectional profile and extends in a lengthwise direction. Each of these through holes is filled with a solid electrolyte material 43 becoming a gas seal compact to constitute the gas seal layer 13 composed of the solid electrolyte material membrane. Moreover, in the support substrate tape 37b intended to form the gas channel 10 are formed a plurality of additional through holes, of which each has a rectangular sectional profile and extends in the lengthwise direction, to form the gas channel 10. Each of these additional through holes is filled with a gas channel forming material 45 prepared by mixing the inorganic material constituting the fillet portion S with a substance which is scattered at the time of firing, namely a to-be-scattered substance. As the inorganic material constituting the fillet portion S, as has already been described, the support substrate material is desirable in terms of compatibility with the support substrate. Moreover, as the to-be-scattered substance which is scattered at the time of firing, resin such as a paraffin wax and carbon are desirable.

In each of the tapes, exclusive of the solid electrolyte tape 33, a through hole having a rectangular sectional profile can be created in the direction of thickness of the tape by means of stamping. The through hole can be filled with a paste containing the solid electrolyte material 43, as well as a paste containing the gas channel forming material 45 by means of screen printing. Alternatively, the solid electrolyte material 43 as well as the gas channel forming material 45 can be shaped into a sheet-like member and then housed in the through hole.

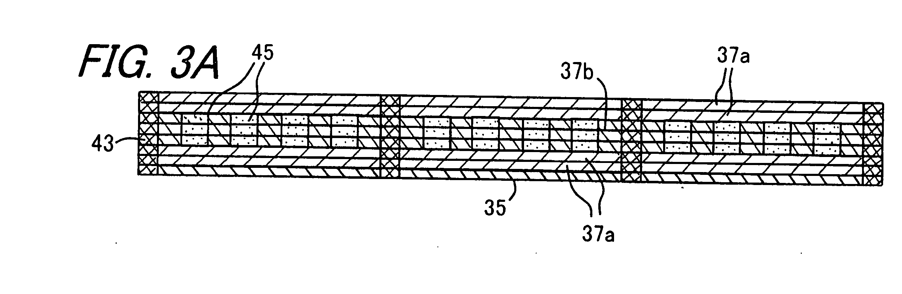

At first, as shown in Fig. 3A, on the interconnector layer tape 35 shown in Fig. 2A are laminated two pieces of the support substrate tapes 37a shown in Fig. 2B in such a manner that the individual solid electrolyte materials 43 lying inside the through holes of the interconnector layer tape 35 and the support substrate tapes 37a are aligned with each other. Then, on the upper surface of the thus obtained laminate are laminated three pieces of the support substrate tapes 37b shown in Fig. 2C in such a manner that the individual solid electrolyte materials 43, as well as the individual gas channel forming materials 45, lying inside the through holes of the support substrate tapes 37b are aligned with each other. Likewise, two pieces of the support substrate tapes 37a shown in Fig. 2B are laminated thereon. In this way, a support substrate assembly compact is prepared.

That is, the space having a rectangular sectional profile created as a result of laminating three pieces of the support substrate tapes 37b one after another, is filled with the gas channel forming material 45.

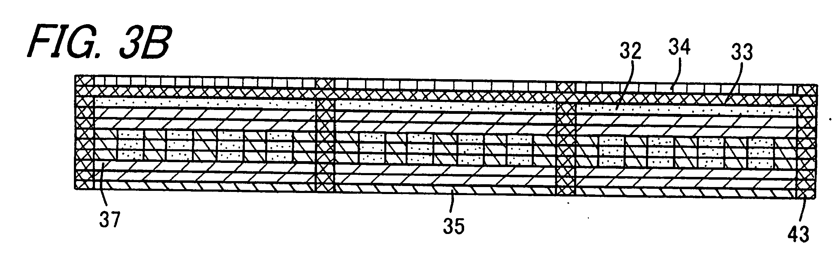

After that, as shown in Fig. 3B, on the support substrate tape 37a is laminated the fuel-side electrode tape 32 shown in Fig. 2D in such a manner that the individual solid electrolyte materials 43 lying inside the through holes of the former and the latter are aligned with each other. Then, on the upper surface of the fuel-side electrode tape 32 is laminated the solid electrolyte tape 33 shown in Fig. 2E. Further, on the upper surface thereof is laminated the oxygen-side electrode tape 34 in such a manner that the solid electrolyte material 43 lying inside the through hole of the oxygen-side electrode tape 34 and those lying inside the through holes of the fuel-side electrode tape 32 and the support substrate tapes 37a and 37b are aligned with each other. In this way, a laminate is prepared. In the embodiment shown in Figs. 3A and 3B, the solid electrolyte materials 43 of the individual layers are laminated on top of each other. As will be described later, by cutting the midportion of a stack of the solid electrolyte materials 43 in the direction of thickness of the laminate, it is possible to obtain three pieces of fuel cell laminates from a single laminate.

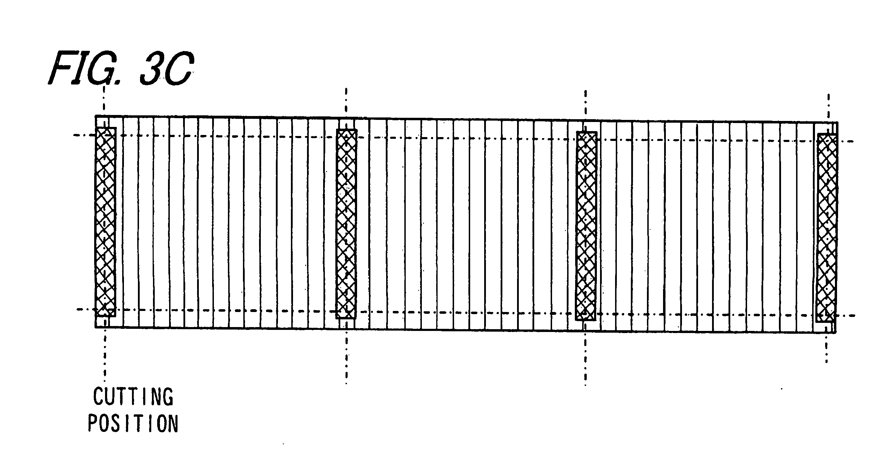

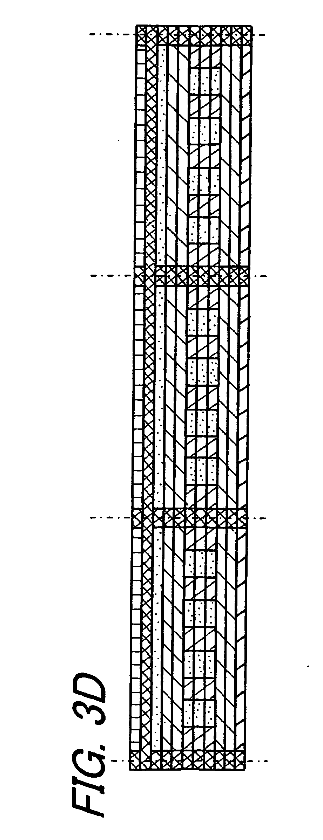

After that, the laminate is cut up at the positions indicated by alternate long and short dashed lines in Figs. 3C and 3D; that is, the solid electrolyte material 43 is subjected to cutting at its midportion in the direction of thickness thereof while the lengthwise opposite ends of the solid electrolyte material 43 are cut away. In other words, the laminate is cut up in the lengthwise direction in such a manner as to divide the solid electrolyte material 43 lying inside the through hole of the laminate into two portions. In this way, there are formed a plurality (three pieces, in this embodiment) of fuel cell laminates, of which each is composed of the support substrate compact 37 whose surfaces are surrounded by the solid electrolyte tape 33, the solid electrolyte material 43, and the interconnector layer tape 35. Then, the fuel cell laminates are each subjected to degreasing and firing to cause the to-be-scattered substance constituting the gas channel forming material 45 to scatter, thus forming the gas channel 10. The fuel cell according to the invention can be manufactured in that way. The cross sectional dimensions of the fuel cell are respectively 1.5 to 10 mm in thickness, and 15 to 40 mm in width, and the length of the fuel cell (the length in the direction in which the gas channel is formed) is 100 to 200 mm, for example. Note that, in Figs. 2A through 2F, Fig. 3C, and Fig. 5B, the fuel cell is illustrated as having a reduced lengthwise dimension.

In the fuel cell manufactured by the sheet lamination method thus far described, the gas channel 10 has such a sectional profile as shown in Fig. 1C in which the inner surface bears irregularities due to the conditions of the support substrate sheets to be laminated. This sectional profile of the gas channel 10 is a determinant factor of whether or not the fuel cell is manufactured by the sheet lamination method.

Moreover, according to the manufacturing method embodying the invention, the laminate is fired. At this time, the to-be-scattered substance constituting the gas channel forming material 45 is caused to scatter, and simultaneously, as indicated by a symbol S in Fig. 1C, the inorganic material is caused to spread to the four corners of the gas channel of the support substrate 1 thereby to form the fillet portions S.

That is, in the fuel cell laminate, the degree of intimate contact among the tapes can be increased through the application of pressure. At this time, as shown in Fig. 4, the space constituting the gas channel is so shaped that its side surfaces protrude inwardly and convexly, and as a consequence the four corners of the gas channel are each acute-angled. In this case, peeling or cracking in the support substrate tapes 37a and 37b at the acute-angled corners is prone to occur. However, with the filling of the gas channel forming material 45 containing the inorganic material in the space constituting the gas channel 10, at the time when the laminate is fired, as shown in Fig. 1C, the inorganic material contained in the gas channel forming material 45 is caused to spread to the four corners of the gas channel 10 under a capillary phenomenon. This makes the formation of the fillet portions S possible.

Moreover, with the manufacturing method according to the invention, for example, even if the support substrate is made to have a thickness as small as approximately 1,5 mm, the thick gas seal layers can be formed on the side surfaces thereof, and therefore it is possible to improve the gas sealability.

In such a fuel cell, by virtue of the fillet portions S formed at the corners of the gas channel 10 of the support substrate 1, occurrence of peeling or cracking at the corners of the gas channel 10 can be suppressed in the course of manufacture of the fuel cell. As another advantage, it is possible to prevent propagation of a crack from the corners of the gas channel 10 resulting from a long-time electric power generation and thereby prevent occurrence of gas leakage through the gas channel 10.

Note that although the above embodiment description deals with the case where the oxygen-side electrode 4 is fired concurrently with the solid electrolyte tape 33, the support substrate tapes 37a, b, and so forth, the oxygen-side electrode may also be formed in the following manner. Following the completion of co-firing of the solid electrolyte tape and the support substrate tape, the oxygen-side electrode material is applied to the tapes by means of spray coating or otherwise so that it can be print-coated onto the solid electrolyte.

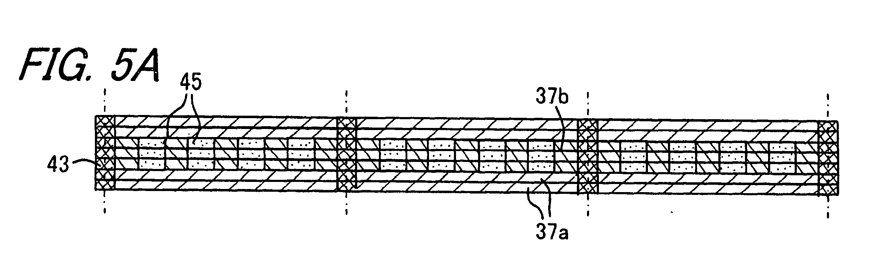

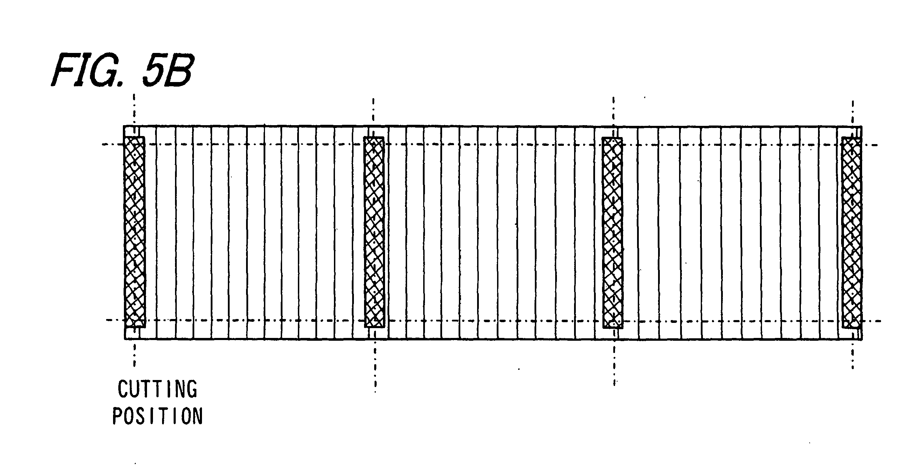

Figs. 5A and 5B show another embodiment of the invention that can be manufactured in the following manner. As shown in Figs. 5A and 5B, at first the support substrate compact 37 is formed, and, following the completion of firing, the fuel-side electrode, the solid electrolyte, and oxygen-side electrode are formed thereon. In this case, it is practicable that, after the support substrate alone is prepared by the tape lamination method and firing is carried out, and the solid electrolyte and so forth is formed by applying and baking the materials used for their formation onto the support substrate thus obtained.

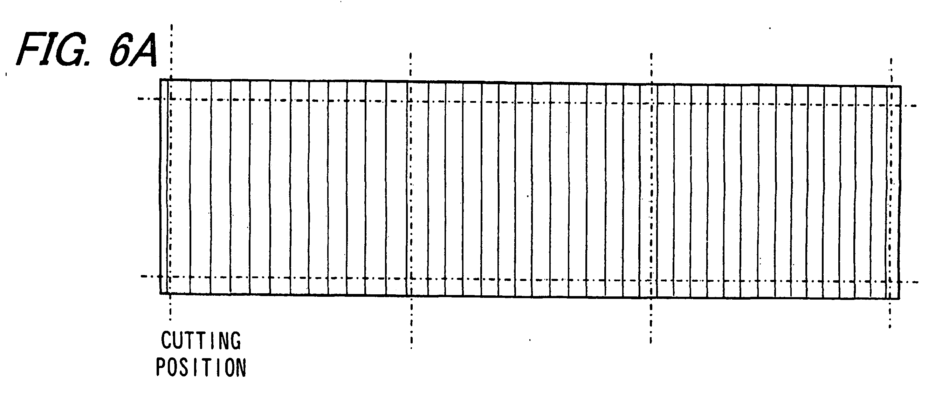

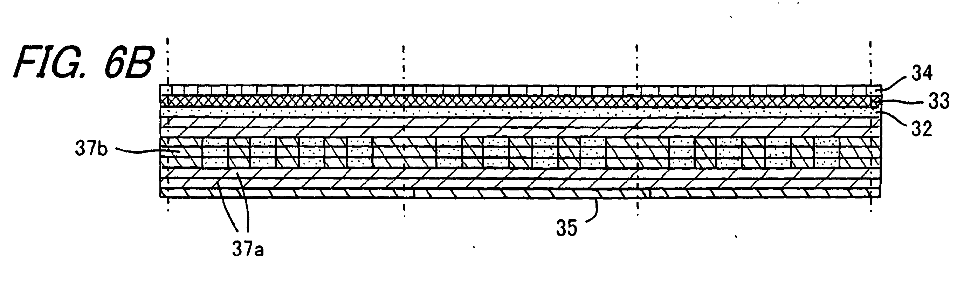

Figs. 6A and 6B show still another embodiment of the invention that can be manufactured in the following manner. The individual tapes are laminated on top of each other without forming the solid electrolyte material 43. Then, the laminate is cut up at the positions indicated by alternate long and short dashed lines. Following the completion of firing, the solid electrolyte material 43 is formed on the side surfaces of the support substrate 1 thus obtained. In this case, it is practicable that the support substrate 1 having formed thereon the solid electrolyte 3 and the interconnector 5 is immersed in a solution containing the solid electrolyte material, with the areas other than the part in which is formed the solid electrolyte material 43 kept masked, whereupon the solid electrolyte material 43 is formed on the side surfaces of the support substrate 1 through a heating treatment.

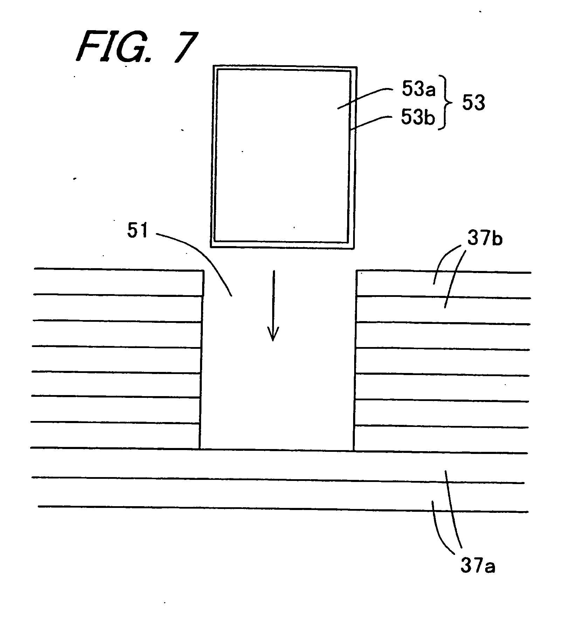

Moreover, although the above embodiment description deals with the case where the through holes of the support substrate tapes 37b are filled with the gas channel forming material 45 and subsequently these support substrate tapes 37b are laminated on top of each other, it is also practicable that, as shown in Fig. 7, the through hole is not filled with any material at the step of forming the tapes, and, following the completion of tape lamination, a core 53 made of the gas channel forming material is housed inside a concavity 51 created as a result of laminating a plurality of the support substrate tapes 37b.

Moreover, it is practicable that the core 53 is formed by applying an inorganic material 53b constituting the fillet portion S around a to-be-scattered substance 53a which is scattered during firing, and, after the thus obtained core 53 having a coating of the inorganic material 53b is housed inside the concavity 51, firing is carried out. In this way, as indicated by the symbol S in Fig. 1C, the inorganic material 53b of the core 53 is caused to spread to the four corners thereby to form the fillet portions S.

Alternatively, it is practicable that, after the gas channel is formed through firing under the condition where a to-be-scattered substance which is scattered during firing is used as the gas channel forming material, the sintered compact thus obtained is immersed in a solution containing the inorganic material constituting the fillet portions S. In this way, the inorganic material is adhered to the corners of the gas channel. Then, heat treatment is carried out so that the inorganic material portions can be print-coated thereto, whereby the fillet portions S are formed.

Moreover, although the above embodiment description deals with the case where the interconnector layer tape 35, the support substrate tapes 37a and 37b, the fuel-side electrode tape 32, the solid electrolyte tape 33, and the oxygen-side electrode tape 34 are each laminated in the limited number, the invention is not limited to the number of layers given in the above description. In addition, the formation of an intermediary layer or the like on the tapes is not deemed to be a detriment to the implementation of the invention.

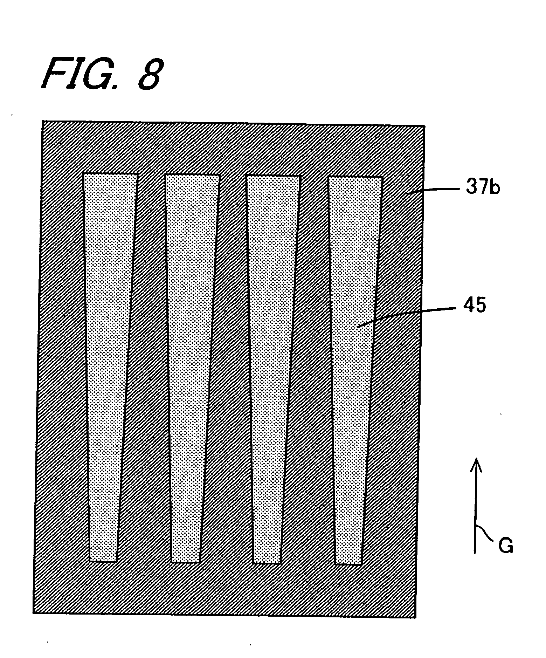

Moreover, in the invention, by making a change to the shape of the through hole which is formed in the support substrate tape 37b, it is possible to change the configuration of the gas channel 10 freely and thereby obtain a gas channel configuration which is ideal for an improvement in characteristics. For example, as shown in Fig. 8, in forming the support substrate tape 37b, the through hole can be so shaped that its width becomes larger gradually from one end to the other in a gas flowing direction G. In this case, in the fuel cell obtained, a gas can be diffused to the solid electrolyte sufficiently in the direction of the length of the cell.

That is, in a case where the gas channel 10 has a uniform cross-sectional area throughout in the direction of the length of the cell, the concentration of a gas is high at the gas inlet port of the fuel cell, whereas it is low at the gas outlet port thereof. Therefore, while gas diffusion can be achieved adequately with the cross-sectional area of the gas channel 10 at its inlet port reduced to thereby increase the velocity of flow of a gas, since the concentration of a gas is low at the outlet port, it is possible to increase the area of the gas channel 10 and thereby decrease the velocity of flow of a gas. As a consequence, satisfactory gas diffusion can be achieved.

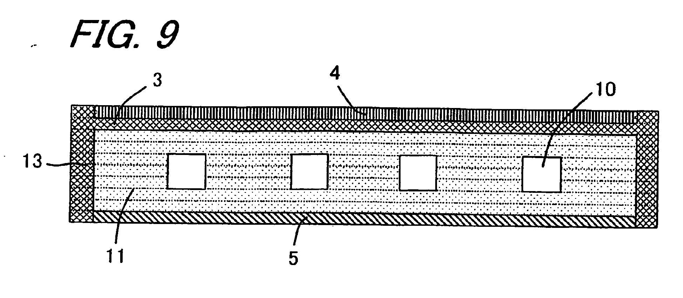

Note that although the above embodiment description pertains to the fuel cell manufactured by forming the fuel-side electrode 2 on the support substrate 1, the invention is applicable to a case where the support substrate 1 serves also as the fuel-side electrode 2, in other words, as shown in Fig. 9, such a fuel cell as manufactured by forming, on a support substrate 11 which serves also as a fuel-side electrode, the solid electrolyte 3 and the oxygen-side electrode 4. Also in this case, it is possible to achieve the same effects as achieved in the above-described embodiment. Such a fuel cell can be manufactured in the same manner as in the above-described fuel cell shown in Figs. 1A through 1C except that, in the former, the fuel-side electrode material is used as the support substrate material.

Moreover, although the above embodiment description pertains to the fuel cell constituted by forming, on the support substrate, the fuel-side electrode, the solid electrolyte, and the oxygen-side electrode one after another in the order named, the invention is applicable to a fuel cell constructed by forming, on the support substrate, the oxygen-side electrode, the solid electrolyte, and the fuel-side electrode one after another in the order named. Also in this case, it is possible to achieve the same effects as achieved in the above-described embodiment. In addition, even if the fuel cell is so deigned that the support substrate serves also as the oxygen-side electrode, it is possible to achieve the same effects as achieved in the above-described embodiment.

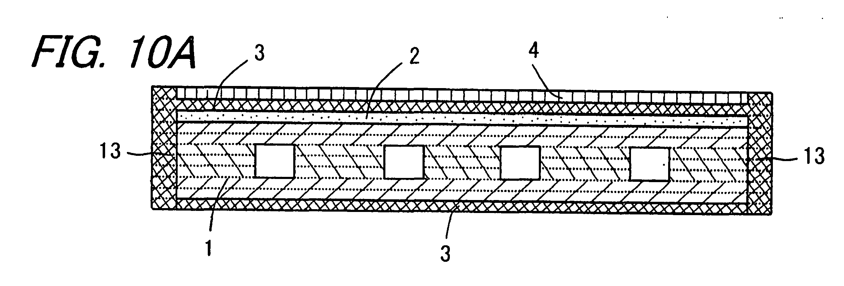

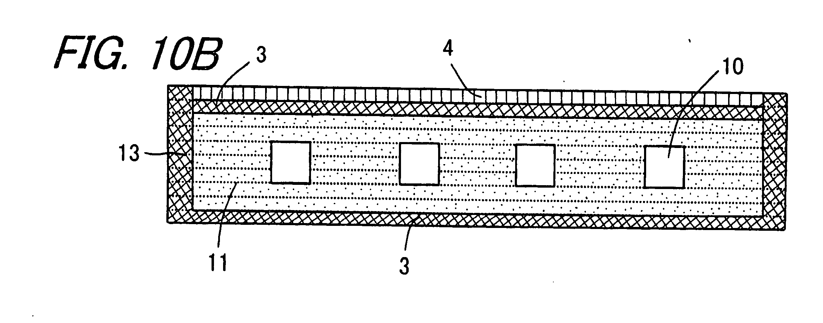

Moreover, the invention is also applicable to the production of a so-called interconnector-less type fuel cell as shown in Figs. 10A and 10B in which the support substrate is surrounded with the solid electrolyte. In this construction, a solid electrolyte tape is employed instead of the interconnector layer tape shown in Figs. 3A through 3D. In this case, on the lower surface of the support substrate 1 are formed the solid electrolyte 3 and the oxygen-side electrode via the fuel-side electrode. This makes it possible to allow not only the upper surface of the support substrate 1 but also the lower surface thereof to function as a power generating portion, and thereby enhance the power generation capability.

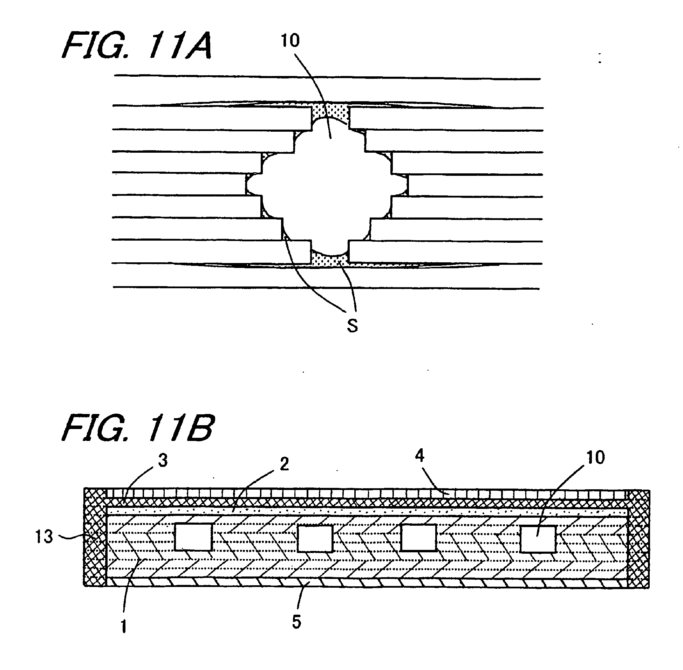

Moreover, although the above embodiment description deals with the case where the gas channel 10 having a rectangular sectional profile is formed, the invention is also applicable to a case where, as shown in Fig. 11A, a gas channel having a substantially circular sectional profile is formed. With the provision of the gas channel having such a configuration, it is possible to increase the strength of the support substrate.

Moreover, the invention is also applicable to a case where, as shown in Fig. 11B, the gas channel 10 is formed at a position which is closer to the solid electrolyte 3 rather than the interconnector 5. In this case, the power generation capability can be enhanced.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

According to the fuel cell embodying the invention, by virtue of the fillet portions formed at the corners of the gas channel of the support substrate, occurrence of cracking at the corners of the gas channel can be suppressed in the course of manufacture of the fuel cell. As another advantage, it is possible to prevent propagation of a crack from the corners of the gas channel resulting from a long-time electric power generation, and thereby prevent occurrence of gas leakage through the gas channel.

Moreover, according to the fuel cell manufacturing method embodying the invention, since the gas channel forming material composed of an inorganic material and the space corresponding to the configuration of the gas channel of the support substrate compact is filled with a to-be-scattered substance, upon firing the support substrate compact, the to-be-scattered substance contained in the gas channel forming material is caused to scatter, and simultaneously the inorganic material is caused to congregate to the corners of the gas channel, in particular to crevices of the corners created as a result of pressurizing the support substrate compact (peeled-off portions), under a capillary phenomenon. In this way, the fillet portions are formed and thereby the corners of the gas channel can be rounded off. This makes it possible to prevent occurrence of cracking in the course of manufacture of the cell. Moreover, with the provision of the fillet portions, propagation of a crack from the corners of the gas channel can be prevented.

Moreover, by firing the support substrate compact, the first electrode compact, and the solid electrolyte at one time, or by firing the support substrate compact which serves also as the first electrode and the solid electrolyte compact at one time, it is possible to expedite mass production even further which brings costs down. In particular, by designing the first electrode compact and/or the solid electrolyte compact in the form of a tape, it is possible to laminate, on the support substrate compact composed of a lamination of a plurality of green tapes, the tape-shaped first electrode compact and/or the tape-shaped solid electrolyte compact continuously. This helps expedite mass production.

Further, the support substrate is formed by laminating a plurality of green tapes containing powder of the support substrate material on top of each other and thereafter firing the laminate. Therefore, it is possible to adopt the sheet lamination method, the screen printing method, and so forth as have conventionally been in use as a method for manufacturing a ceramic substrate, and thus achieve mass production by means of automatic machinery. This makes cost reduction possible.

## Claims

1. A method for manufacturing a fuel cell constituted such that on a support substrate having a gas channel formed inside are laminated a first electrode, a solid electrolyte, and a second electrode one after another, the method being **characterized by** forming a support substrate through a step of firing a support substrate compact which is formed by laminating a plurality of green tapes each of which has a through hole formed in a direction of thickness thereof and contains powder of a support substrate material, wherein, in the support substrate compact, a space of a gas channel configuration that is formed by said through holes in the plurality of green tapes is filled with a gas channel forming material (45) composed of a mixture of an inorganic material for forming a rounded-off portion at a corner of a gas channel and resin or carbon which is burned off during firing.

2. The method for manufacturing the fuel cell of claim 1, comprising: a step of preparing a laminate on which a first electrode compact and a solid electrolyte compact are laminated one after another on the support substrate compact; a step of firing the laminate; and a step of forming the second electrode on the solid electrolyte of a sintered compact.

3. The method for manufacturing the fuel cell of claim 1 or 2, wherein the first electrode is a fuel-side electrode and the second electrode is an oxygen-side electrode.

4. A method for manufacturing a fuel cell having a constitution such that on a support substrate which has a gas channel formed inside and serves as a first electrode are laminated a solid electrolyte and a second electrode one after another, the method being **characterized by** forming a support substrate through a step of firing a support substrate compact which is formed by laminating a plurality of green tapes each of which has a through hole formed in a direction of thickness thereof and contains powder of a support substrate material, wherein, in the support substrate compact, a space of a gas channel configuration that is formed by said through holes in the plurality of green tapes is filled with a gas channel forming material (45) composed of a mixture of an inorganic material for forming a rounded-off portion at a corner of a gas channel and a resin or carbon which is burned off during firing.

5. The method for manufacturing the fuel cell of claim 4, comprising: a step of preparing a laminate on which a solid electrolyte compact is laminated on the support substrate compact; a step of firing the laminate; and a step of forming the second electrode on the solid electrolyte of a sintered compact.

6. The method for manufacturing the fuel cell of claim 4 or 5, wherein the support substrate is a support substrate which serves also as a fuel-side electrode and the second electrode is an oxygen-side electrode.

7. The method for manufacturing the fuel cell of any one of claims 1 to 6, wherein a part of the surface of a support substrate compact which is free of a lamination of a solid electrolyte compact is covered with an insulating gas seal compact.

8. The method for manufacturing the fuel cell of any one of claims 1 to 7, wherein the laminate has a solid electrolyte compact formed on its one principal surface as viewed in a direction in which the green tapes constituting the support substrate compact are laminated and has an interconnector compact formed on its other principal surface, and that the support substrate compact has its opposite side surfaces covered with an insulating gas seal compact respectively, and the periphery of the support substrate compact is covered with the solid electrolyte compact, the interconnector compact, and the insulating gas seal compact.

9. The method for manufacturing the fuel cell of claim 8, wherein a first support substrate tape and a second support substrate tape are prepared for use, in which the first support substrate tape has a plurality of gas seal material-filled through holes extending in the direction of the length thereof, whereas the second support substrate tape has further a plurality of gas channel forming material-filled through holes extending in the direction of the length thereof, which are arranged between the adjacent gas seal material-filled through holes of the first support substrate tape, and after a plurality of the first support substrate tapes are laminated on top of each other, a plurality of the second support substrate tapes are laminated on an upper surface thereof, and a plurality of the first support substrate tapes are further laminated on an upper surface thereof, whereby a support substrate assembly compact is prepared, and the support substrate assembly compact is cut up in the direction of the length thereof in such a manner as to divide the gas seal material lying inside the through hole into two portions, whereupon a support substrate compact is formed having its opposite side surfaces covered with an insulating gas seal compact respectively.

10. The method for manufacturing the fuel cell of any one of claims 7 to 9, wherein the insulating gas seal compact contains a solid electrolyte material.

## Patentansprüche

1. Verfahren zur Herstellung einer Brennstoffzelle, die so ausgestaltet ist, dass auf einem Trägersubstrat, in dem ein Gaskanal ausgeformt ist, eine erste Elektrode, ein fester Elektrolyt und eine zweite Elektrode aufeinanderfolgend geschichtet sind, wobei das Verfahren **dadurch gekennzeichnet ist, dass** ein Trägersubstrat durch einen Schritt des Brennens eines Trägersubstrat-Presskörpers gebildet wird, der durch Aufeinanderschichten einer Mehrzahl von Greentape-Bändern hergestellt wird, die jeweils ein Durchgangsloch aufweisen, das in ihrer Dickenrichtung ausgebildet ist und Pulver eines Trägersubstratmaterials enthält, wobei in dem Trägersubstrat-Presskörper ein Raum einer Gaskanalkonfiguration, der durch die Durchgangslöcher in der Mehrzahl von Greentape-Bändern gebildet ist, mit einem Material (45) zum Bilden eines Gaskanals gefüllt ist, das aus einer Mischung eines anorganischen Materials zum Ausbilden eines abgerundeten Bereichs an einer Ecke eines Gaskanals und einem Harz oder Kohlenstoff besteht, welches bzw. welcher während des Brennens abgebrannt wird.

2. Verfahren zur Herstellung der Brennstoffzelle nach Anspruch 1, mit: einem Schritt der Herstellung eines Laminats, auf dem ein erster Elektroden-Presskörper und ein fester Elektrolyt-Presskörper aufeinanderfolgend auf den Trägersubstrat-Presskörper geschichtet sind, einem Schritt des Brennens des Laminats, und einem Schritt der Ausbildung der zweiten Elektrode auf dem festen Elektrolyten eines gesinterten Presskörpers.

3. Verfahren zur Herstellung der Brennstoffzelle nach Anspruch 1 oder 2, wobei die erste Elektrode eine brennstoffseitige Elektrode ist und die zweite Elektrode eine sauerstoffseitige Elektrode.

4. Verfahren zur Herstellung einer Brennstoffzelle, die so ausgestaltet ist, dass auf einem Trägersubstrat, in dem ein Gaskanal ausgeformt ist und welches als erste Elektrode dient, ein fester Elektrolyt und eine zweite Elektrode aufeinanderfolgend geschichtet sind, wobei das Verfahren **dadurch gekennzeichnet ist, dass** ein Trägersubstrat durch einen Schritt des Brennens eines Trägersubstrat-Presskörpers hergestellt wird, der durch Aufeinanderschichten einer Mehrzahl von Greentape-Bändern gebildet ist, die jeweils ein Durchgangsloch aufweisen, das in ihrer Dickenrichtung ausgebildet ist und Pulver eines Trägersubstratmaterials enthält, wobei in dem Trägersubstrat-Presskörper ein Raum einer Gaskanalkonfiguration, der durch die Durchgangslöcher in der Mehrzahl von Greentape-Bändern gebildet ist, mit einem Material (45) zum Bilden eines Gaskanals gefüllt ist, das aus einer Mischung eines anorganischen Materials zum Ausbilden eines abgerundeten Bereichs an einer Ecke eines Gaskanals und einem Harz oder Kohlenstoff besteht, welches bzw. welcher während des Brennens abgebrannt wird.

5. Verfahren zur Herstellung einer Brennstoffzelle nach Anspruch 4, mit: einem Schritt des Herstellens eines Laminats, auf dem ein Festelektrolyt-Presskörper auf den Trägersubstrat-Presskörper geschichtet ist, einem Schritt des Brennens des Laminats, und einem Schritt des Bildens der zweiten Elektrode auf dem Festelektrolyten eines gesinterten Presskörpers.

6. Verfahren zur Herstellung der Brennstoffzelle nach Anspruch 4 oder 5, wobei das Trägersubstrat ein Trägersubstrat ist, welches ebenfalls als brennstoffseitige Elektrode dient, und wobei die zweite Elektrode eine sauerstoffseitige Elektrode ist.

7. Verfahren zur Herstellung der Brennstoffzelle nach einem der Ansprüche 1 bis 6, wobei ein Teil der Oberfläche eines Trägersubstrat-Presskörpers, der frei ist von einer Beschichtung mit einem Festelektrolyt-Presskörper, mit einem isolierenden Gasabdichtungs-Presskörper abgedeckt ist.

8. Verfahren zur Herstellung der Brennstoffzelle nach einem der Ansprüche 1 bis 7, wobei das Laminat einen Festelektrolyt-Presskörper aufweist, der auf seiner einen Hauptfläche, gesehen in einer Richtung, in der die Greentape-Bänder, die den Trägersubstrat-Presskörper bilden, geschichtet sind, ausgebildet ist, und wobei das Laminat einen Verbinder-Presskörper aufweist, der auf dessen anderen Hauptfläche geformt ist, und wobei die Flächen der entgegengesetzten Seite des Trägersubstrat-Presskörpers jeweils mit einem isolierenden Gasdichtungs-Presskörper bedeckt sind, und wobei der Rand des Trägersubstrat-Presskörpers mit dem Festelektrolyt-Presskörper, dem Verbinder-Presskörper und dem isolierenden Gasdichtungs-Presskörper bedeckt ist.

9. Verfahren zur Herstellung der Brennstoffzelle nach Anspruch 8, wobei ein erstes Trägersubstratband und ein zweites Trägersubstratband zu ihrer Verwendung hergerichtet werden, wobei das erste Trägersubstratband eine Mehrzahl von mit Gasabdichtungsmaterial gefüllten Durchgangslöchern aufweist, die sich in ihrer Längsrichtung erstrecken, wogegen das zweite Trägersubstratband ferner eine Mehrzahl von Durchgangslöchern aufweist, die mit einem einen Gaskanal bildenden Material gefüllt sind, und die sich in ihrer Längsrichtung erstrecken, wobei die Durchgangslöcher zwischen den benachbart nebeneinander liegenden mit Gasabdichtungsmaterial gefüllten Durchgangslöchern des ersten Trägersubstratbandes angeordnet sind, und wobei, nachdem eine Mehrzahl von den ersten Trägersubstratbändern aufeinandergeschichtet sind, eine Mehrzahl von den zweiten Trägersubstratbändern auf einer oberen Fläche davon geschichtet werden, und wobei eine Mehrzahl der ersten Trägersubstratbänder ferner auf einer oberen Flächen davon geschichtet werden, wodurch ein Trägersubstratanordnungs-Presskörper gebildet wird, und wobei der Trägersubstratanordnungs-Presskörper in seiner Längsrichtung derart aufgeschnitten wird, dass er das Gasabdichtungsmaterial, welches in dem Durchgangsloch liegt, in zwei Teile teilt, woraufhin ein Trägersubstrat-Presskörper gebildet wird, dessen sich gegenüberliegende Seitenflächen jeweils mit einem isolierenden Gasdichtungs-Presskörpers bedeckt sind.

10. Verfahren zur Herstellung der Brennstoffzelle nach einem der Ansprüche 7 bis 9, wobei der isolierende Gasdichtungs-Presskörper ein Festelektrolytmaterial enthält.

## Revendications

1. Procédé de fabrication d'une pile à combustible constituée de telle manière que, sur un substrat support ayant un canal de gaz formé à l'intérieur, sont stratifiées une première électrode, un électrolyte solide, et une deuxième électrode l'une après l'autre, le procédé étant **caractérisé par** la formation d'un substrat support par l'intermédiaire d'une étape de cuisson d'une poudre compacte pour substrat support qui est formée par stratification d'une pluralité de bandes vertes dont chacune a un trou traversant formé dans un sens de l'épaisseur de celle-ci et contient une poudre d'un matériau pour substrat support, dans lequel, dans la poudre compacte pour substrat support, un espace d'une configuration de canal de gaz qui est formé par lesdits trous traversants dans la pluralité de bandes vertes est rempli avec un matériau (45) de formation de canal de gaz composé d'un mélange d'un matériau inorganique pour former une partie arrondie dans un angle d'un canal de gaz et d'une résine ou d'un carbone qui est calciné(e) pendant la cuisson.

2. Procédé de fabrication de la pile à combustible selon la revendication 1, comprenant : une étape de préparation d'un stratifié sur lequel une poudre compacte pour première électrode et une poudre compacte pour électrolyte solide sont stratifiées l'une après l'autre sur la poudre compacte pour substrat support ; une étape de cuisson du stratifié ; et une étape de formation de la deuxième électrode sur l'électrolyte solide d'une poudre compacte frittée.

3. Procédé de fabrication de la pile à combustible selon la revendication 1 ou 2, dans lequel la première électrode est une électrode de côté combustible et la deuxième électrode est une électrode de côté oxygène.

4. Procédé de fabrication d'une pile à combustible ayant une constitution telle que, sur un substrat support qui a un canal de gaz formé à l'intérieur et sert comme une première électrode, sont stratifiées un électrolyte solide et une deuxième électrode l'une après l'autre, le procédé étant **caractérisé par** la formation d'un substrat support par l'intermédiaire d'une étape de cuisson d'une poudre compacte pour substrat support qui est formée par stratification d'une pluralité de bandes vertes dont chacune a un trou traversant formé dans un sens de l'épaisseur de celle-ci et contient une poudre d'un matériau pour substrat support, dans lequel, dans la poudre compacte pour substrat support, un espace d'une configuration de canal de gaz qui est formé par lesdits trous traversants dans la pluralité de bandes vertes est rempli avec un matériau (45) de formation de canal de gaz composé d'un mélange d'un matériau inorganique pour former une partie arrondie dans un angle d'un canal de gaz et d'une résine ou d'un carbone qui est calciné(e) pendant la cuisson.

5. Procédé de fabrication de la pile à combustible selon la revendication 4, comprenant : une étape de préparation d'un stratifié sur lequel une poudre compacte pour électrolyte solide est stratifiée sur la poudre compacte pour substrat support ; une étape de cuisson du stratifié ; et une étape de formation de la deuxième électrode sur l'électrolyte solide d'une poudre compacte frittée.

6. Procédé de fabrication de la pile à combustible selon la revendication 4 ou 5, dans lequel le substrat support est un substrat support qui sert également comme une électrode de côté combustible et la deuxième électrode est une électrode de côté oxygène.

7. Procédé de fabrication de la pile à combustible selon l'une quelconque des revendications 1 à 6, dans lequel une partie de la surface d'une poudre compacte pour substrat support qui est dépourvue d'une stratification d'une poudre compacte pour électrolyte solide est recouverte avec une poudre compacte pour joint de gaz d'isolation.

8. Procédé de fabrication de la pile à combustible selon l'une quelconque des revendications 1 à 7, dans lequel le stratifié a une poudre compacte pour électrolyte solide formée sur une surface principale comme vue dans un sens dans lequel les bandes vertes constituant la poudre compacte pour substrat support sont stratifiées et a une poudre compacte pour interconnecteur formée sur son autre surface principale, et la poudre compacte pour substrat support a ses surfaces latérales opposées recouvertes avec une poudre compacte pour joint de gaz d'isolation respectivement, et la périphérie de la poudre compacte pour substrat support est recouverte avec la poudre compacte pour électrolyte solide, la poudre compacte pour interconnecteur, et la poudre compacte pour joint de gaz d'isolation.

9. Procédé de fabrication de la pile à combustible selon la revendication 8, dans lequel une première bande pour substrat support et une deuxième bande pour substrat support sont préparées pour utilisation, dans lequel la première bande pour substrat support a une pluralité de trous traversants remplis d'un matériau pour joint de gaz s'étendant dans le sens de la longueur de celle-ci, tandis que la deuxième bande pour substrat support a en outre une pluralité de trous traversants remplis d'un matériau de formation de canaux de gaz s'étendant dans le sens de la longueur de celle-ci, qui sont agencés entre les trous traversants remplis d'un matériau pour joint de gaz adjacents de la première bande pour substrat support, et après qu'une pluralité des premières bandes pour substrat support ont été stratifiées l'une par-dessus l'autre, une pluralité des deuxièmes bandes pour substrat support sont stratifiées sur une surface supérieure de celles-ci, et une pluralité des premières bandes pour substrat support sont en outre stratifiées sur une surface supérieure de celles-ci, d'où il résulte qu'une poudre compacte d'ensemble de substrat support est préparée, et la poudre compacte d'ensemble de substrat support est découpée dans le sens de la longueur de celle-ci de façon à diviser le matériau pour joint de gaz se trouvant à l'intérieur du trou traversant en deux parties, ensuite de quoi une poudre compacte pour substrat support est formée, ayant ses surfaces latérales opposées recouvertes avec une poudre compacte pour joint de gaz d'isolation respectivement.

10. Procédé de fabrication de la pile à combustible selon l'une quelconque des revendications 7 à 9, dans lequel la poudre compacte pour joint de gaz d'isolation contient un matériau d'électrolyte solide.
